# FASCICULE DE BREVET EUROPEEN

(11) **EP 2 561 944 B1**
(45) Date de publication et mention de la délivrance du brevet: **02.09.2015**
(21) Numéro de dépôt: 12177321.2
(22) Date de dépôt: 20.07.2012
(51) Int. Cl.: B23K 9/173, B23K 9/28, B23K 9/32

(54) **Torche de soudage à l'arc à étanchéité améliorée**
Lichtbogenschweißbrenner mit verbesserter Abdichtung
Arc-welding torch with improved sealing

(30) Priorité: 23.08.2011 FR 1157450
(43) Date de publication de la demande: 27.02.2013
(73) Titulaire: AIR LIQUIDE WELDING FRANCE, 75007 Paris (FR)
(72) Inventeur: Maocec, Christian, 60700 PONT SAINTE MAXENCE (FR)
(74) Mandataire: Pittis, Olivier

(56) Documents cités:
- WO-A1-2009/050637
- GB-A- 1 393 561
- GB-A- 1 403 225

## Description

L'invention porte sur une torche manuelle de soudage à l'arc électrique, de préférence de type MIG/MAG, avec capteur d'aspiration des fumées de soudage et système de refroidissement par eau amélioré.

En soudage MIG/MAG manuel, un soudeur tient habituellement à la main une torche de soudage manuelle qui est utilisée pour réaliser le ou les joints de soudure désirés.

Afin de se conformer à certaines réglementations ou normes qui stipulent que, s'il n'est pas possible de supprimer les émissions sous forme de gaz, vapeurs, aérosols de particules solides ou liquides, de substances insalubres, gênantes ou dangereuses pour la santé des travailleurs, elles doivent être captées au fur et à mesure de leur production, au plus près de leur source d'émission et aussi efficacement que possible, certaines torches manuelles sont équipées d'un conduit ou analogue d'évacuation des fumées qui est connecté fluidiquement à une centrale d'aspiration de sorte de permettre une aspiration des fumées de soudage grâce à un capteur de fumées, assemblé à une portion coudée de la torche de soudage, qui fait souvent, par ailleurs office de porte-buse.

Ces fumées sont aspirées par le capteur de fumées portant la buse, sont canalisées ensuite dans la portion coudée de la torche, le manche de torche, puis dans une gaine, et enfin dans un connecteur spécialement étudié pour le raccordement avec un générateur de soudage et une centrale d'aspiration.

Toutefois, comme le capteur de fumées est situé à proximité de la zone de soudage, il a tendance à s'échauffer et à s'encrasser au fil du temps, et nécessite d'être régulièrement entretenu.

Plusieurs modes de refroidissement du capteur de fumée ont déjà été proposés.

Une première solution de refroidissement connue consiste à mettre en série le circuit de refroidissement de la torche et celui du capteur. Cette solution est décrite dans le document WO-A-2009/050637.

Toutefois, cette première solution a pour inconvénients d'augmenter le nombre de connexions du circuit eau, d'introduire des pertes de charge importantes dans le manche, i.e. le circuit est mis en dépression, et d'obliger à une industrialisation complexe de la partie avant de la torche pour permettre une alimentation en eau de refroidissement du capteur car le capteur et le coude de la torche sont soudés entre eux.

Cette première solution n'est donc pas du tout idéale au plan industriel.

Une deuxième solution connue consiste à ouvrir le circuit d'eau à l'extrémité de lance afin de pouvoir refroidir directement un volume creux usiné dans le capteur et étanché par des joints toriques.

Cette deuxième solution ne pose pas les problèmes rencontrés avec la première solution. Toutefois, un inconvénient notable de cette deuxième solution est lié au système de montage et de démontage des pièces d'usure qui assurent la compression des joints et donc de l'étanchéité du circuit de refroidissement.

En effet, au démontage de ces pièces d'usure, le capteur de fumées est libéré en rotation. Or, cette libération engendre une décompression inévitable des joints qui n'assurent alors plus leur rôle d'étanchéité. Il se produit alors des fuites d'eau de refroidissement.

De plus, comme le capteur n'est plus solidaire de la lance interne de la torche, il peut aussi tomber et se détériorer.

Il en va de même du coude d'aspiration sur lequel est monté le capteur.

De là, le problème qui se pose est de proposer une torche manuelle de soudage à l'arc électrique améliorée, du type à circuit d'eau ouvert, permettant d'obtenir un refroidissement efficace du capteur sans engendrer les inconvénients susmentionnés.

La solution de l'invention est une torche manuelle de soudage à l'arc électrique comprenant :
- un corps de torche comprenant un manche de manipulation, une gâchette de commande électrique et un conduit d'évacuation des fumées,
- une portion tubulaire coudée fixée audit corps de torche et comprenant un conduit interne, ledit conduit interne comprenant à son extrémité aval, une lance de torche tubulaire avec au moins un passage interne axial, et
   caractérisée en ce que :
- la lance de torche tubulaire comprend, sur sa surface externe, une région amont présentant un profil externe donné non circulaire, et une région aval filetée,
- une pièce isolante annulaire, présentant un profil interne complémentaire du profil de la région amont de la lance de torche, étant agencée autour de la région amont de la lance de torche,
- une pièce-écrou taraudée étant vissée sur la région aval filetée de la lance de torche,
- un élément diffuseur d'eau, de forme annulaire et percé d'un ou plusieurs orifices radiaux, étant emmanché sur la lance de torche entre la pièce isolante annulaire et la pièce-écrou taraudée,
- au moins un premier joint torique étant agencé entre la pièce-écrou taraudée et l'élément diffuseur d'eau et
- au moins un deuxième joint torique étant agencé entre l'élément diffuseur d'eau et la pièce isolante annulaire.

Selon le cas, l'invention peut comprendre l'une ou plusieurs des caractéristiques techniques suivantes :
- elle comprend en outre un capteur de fumées comprenant un passage interne et une ou plusieurs ouvertures mettant ledit passage interne en communication fluidique avec l'extérieur de la torche.
- elle comprend en outre une buse de soudage fixée à la portion tubulaire coudée ou au capteur de fumées.
- elle comprend en outre une gâchette de commande électrique et un conduit d'évacuation des fumées.
- la pièce-écrou taraudée est un écrou.
- un élément de rondelle est agencé entre le premier joint torique et la pièce-écrou taraudée, la pièce-écrou taraudée venant, lorsqu'elle est vissée sur la première zone filetée de la lance de torche, appuyer, directement ou indirectement, sur ledit élément de rondelle de manière à le repousser en direction du premier joint torique.
- elle comporte en outre un support de tube contact portant un tube contact, ledit un support de tube contact étant fixé, de préférence vissé, à la deuxième zone filetée de la lance de torche.
- le support de tube contact est maintenu isolé de la buse par un diffuseur isolant agencé entre ledit support de tube contact et ladite buse.
- la lance de torche tubulaire comprend, sur sa surface externe, une région amont présentant un profil externe polygonal, de préférence hexagonal.
- la pièce isolante annulaire, présentant un profil interne complémentaire du profil de la région amont de la lance de torche, vient s'emboîter au niveau de ladite région amont de la lance de torche.
- le capteur de fumées comprend un épaulement interne faisant saillie radialement vers l'intérieur dudit capteur de fumées, la pièce-écrou venant appuyer sur ledit épaulement interne de manière à le repousser en direction de l'élément de rondelle et à le maintenir ainsi au contact dudit élément de rondelle.
- la lance de torche est percée de deux ouvertures située entre la région amont présentant le profil externe donné non circulaire, et la région aval filetée.
- la lance de torche est percée de deux ouvertures diamétralement opposée, c'est-à-dire se faisant face.
- l'élément diffuseur d'eau est positionné entre le premier joint torique et le deuxième joint torique.
- la lance comprend deux tubes concentriques, usinés et assemblés de manière à former dans la double paroi ainsi formée, des circuits d'eau séparés. Ceci permet d'assurer un refroidissement efficace des éléments de la torche qui s'échauffent pendant le soudage.
- un élément diffuseur d'eau a une forme de bague annulaire comportant plusieurs orifices radiaux par lesquels passe l'eau de refroidissement servant à refroidir directement un volume creux usiné dans le capteur de fumées et étanché par des deux joints toriques.
- la lance de torche est percée de deux ouvertures situées en vis-à-vis de l'élément diffuseur d'eau.
- la lance de torche, le capteur de fumées, le support de tube contact et le buse sont coaxiaux.
- le conduit interne se terminant par la lance de torche traverse sensiblement axialement la portion tubulaire coudée et est également coudé au sein de cette portion coudée, c'est-à-dire que ceux-ci sont approximativement concentriques et coaxiaux (bien que leurs axes soient courbes).
- l'extrémité aval de la portion tubulaire coudée est reliée au capteur de fumée, lequel est coiffé d'une jupe externe formant manchon autour de celui-ci de sorte de renforcer l'aspiration dans le cas de très fortes émissions de fumées, comme par exemple lors d'un soudage MAG avec fil fourré fusible.
- la torche est de type MIG/MAG.
- le fil fusible traversant la torche et le tube contact est un fil plein ou un fil fourré.
- le manche de la torche est conformé et dimensionné pour pouvoir être tenu en main par un opérateur de soudage, en particulier un soudeur muni de gants de protection.
- la gâchette de commande électrique sert à déclencher le cycle de soudage organisé ou programmé dans le générateur de soudage, en particulier, la puissance électrique (intensité, tension), le contrôle de la vitesse du fil fusible de soudage, et le contrôle du gaz de protection de l'arc électrique.
- le capteur de fumées à une forme générale tubulaire.
- le capteur de fumées comprend plusieurs ouvertures, telles des ouïes, réparties autour de sa périphérie.
- au moins un conduit interne traverse sensiblement axialement la portion tubulaire coudée, de préférence ledit conduit est également coudé et son rayon de courbure est sensiblement égal à celui de la portion tubulaire coudée.
- la buse vient se fixer par vissage au capteur de fumées.

L'invention concerne aussi une installation de soudage comprenant un générateur de courant de soudage, un dévidoir de fil portant une bobine de fil de soudage, une source de gaz et une torche de soudage à l'arc selon l'invention. La torche de soudage à l'arc est reliée de façon classique au générateur, au dévidoir et à la source de gaz via un faisceau de câbles électriques et de canalisations de fluide, notamment de gaz et/ou d'eau.

Par ailleurs, l'invention porte aussi sur un procédé de soudage à l'arc électrique, en particulier de soudage MIG/MAG, mettant en oeuvre une torche ou une installation de soudage selon l'invention.

L'invention va maintenant être décrite plus en détail en référence aux figures annexées parmi lesquelles :
- la Figure 1 représente un mode de réalisation d'une torche de soudage selon l'invention,
- la Figure 2 est une vue en coupe de la partie active de la torche,
- les Figure 3 est analogue à la Figure 2 mais montre la partie active de la torche sans la buse et sans le support de tube contact, et
- la Figure 4 est une vue éclatée des différents éléments agencés sur la lance de torche du mode de réalisation des Figures 2 et 3.

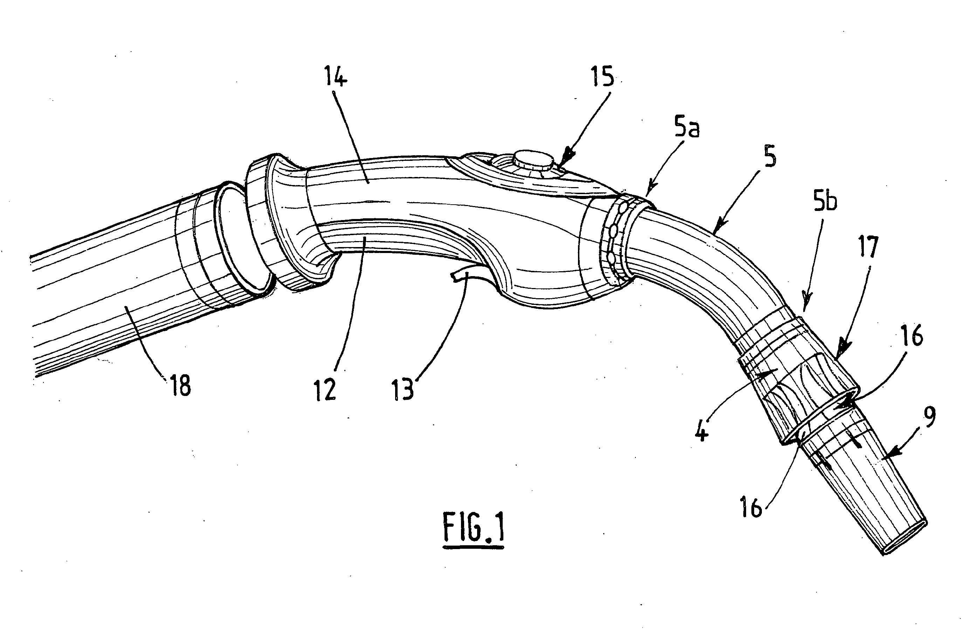

La Figure 1 représente un mode de réalisation d'une torche manuelle de soudage à l'arc électrique selon la présente invention, par exemple une torche de soudage MIG (pour *Metal Inert Gas*), c'est-à-dire de soudage avec apport de métal sous forme d'un fil fusible et mise en place d'une protection gazeuse inerte à base d'un ou plusieurs gaz, tel l'argon, l'hélium et leurs mélanges, ou MAG (pour *Metal Active Gas*) avec une protection gazeuse active à base de CO₂ ou d'un mélange d'argon avec du CO₂, les gaz étant en proportions variables selon les métaux à souder.

Cette torche MIG/MAG comprend un corps de torche 14 muni d'un manche ou poignée de manipulation 12 que l'opérateur tient à la main pendant l'opération de soudage proprement dite, ainsi que d'une gâchette de commande électrique 13 et éventuellement d'un organe de commande à distance 15.

La gâchette de commande électrique 13 est agencée, de manière classique, sur un circuit électrique reliant la torche à un générateur de courant de soudage, et son activation par l'opérateur permet d'autoriser le passage du courant électrique servant à fondre le fil de soudage fusible au niveau de la buse 9 équipant la torche.

Par ailleurs, un organe de commande à distance 15, telle un ou des boutons poussoirs, permet à l'opérateur de commander à distance des équipements de soudage, en particulier le générateur de courant de soudage, voire le dévidoir de fil, de manière à pouvoir régler un ou des paramètres de soudage sans avoir à se déplacer jusqu'à ces équipements, par exemple des paramètres du type tension, intensité, vitesse de fil...

La torche comprend également un capteur de fumées 4 relié mécaniquement par son extrémité amont à l'extrémité aval 5b d'une portion tubulaire coudée 5 en étant maintenu sur la lance de torche 6, comme expliqué ci-après, ladite portion tubulaire coudée 5 venant elle même se fixer, par son extrémité amont 5a, au corps de torche 14, comme illustré en Figure 1.

Le capteur de fumées 4 comprend un passage interne en communication fluidique, via le passage interne de la portion tubulaire coudée 5, avec un conduit d'évacuation des fumées traversant le corps de torche 14 de manière à pouvoir opérer une aspiration de tout ou partie des fumées et gaz émis pendant l'opération de soudage, notamment du fait de la fusion du fil fusible par l'arc électrique.

Les fumées émises lors du soudage sont en fait aspirées et pénètrent dans le premier passage interne du capteur de fumées 4 puis dans le passage interne du corps de torche 14, via une ou plusieurs ouvertures 16, telles des ouïes, aménagées au travers de la paroi du capteur 4 de fumées. Ces ouvertures 16 permettent en fait de faire communiquer l'intérieur du capteur 4 de fumées avec l'atmosphère ambiante qui se charge de fumées lors du soudage.

Comme illustré en Figure 1, l'extrémité aval 5b de la portion tubulaire 5 coudée reliée au capteur 4 de fumée, peut être éventuellement coiffée d'une jupe externe 17 formant manchon autour de celui-ci 4 et des ouïes de sorte de renforcer l'aspiration en cas de très fortes émissions de fumées.

L'évacuation des fumées se fait ensuite par le canal interne du corps de torche 14 puis par la gaine 18, relié à une centrale d'aspiration, par exemple un dispositif à turbine motorisée ou analogue.

Par ailleurs, le capteur de fumées 4 porte, à son extrémité aval, une buse de soudage 9 par laquelle sort le fil fusible et qui permet par ailleurs de distribuer le gaz de protection dans la zone de soudage de manière à la protéger de toute contamination par des impuretés atmosphériques, tel l'oxygène, l'azote ou la vapeur d'eau par exemple.

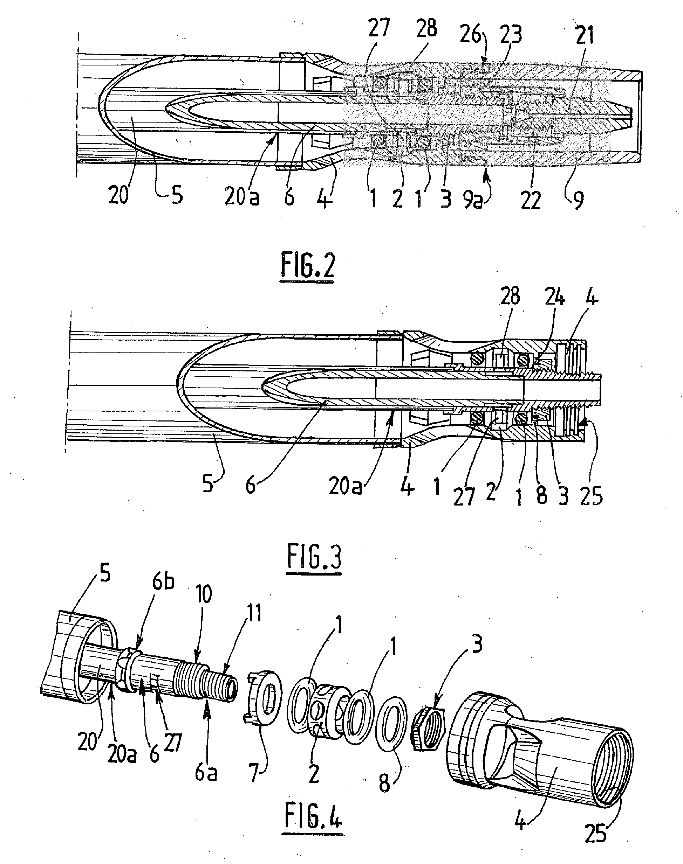

Pour ce faire, comme illustré sur les Figures 2 à 4, la portion tubulaire 5 englobe un conduit interne ou conduit de lance 20 venant se raccorder, via son extrémité amont, à un conduit interne, appelé raccord de lance (non montré), du corps de torche 14, qui servent à véhiculer le fil fusible et le gaz de protection jusque dans la buse 9.

Par ailleurs, le conduit interne ou conduit de lance 20 comprend à son extrémité aval libre 20a, un raccord de sortie appelé lance de torche 6 formé d'au moins une, et de préférence de plusieurs pièces tubulaires concentriques, comme expliqué ci-après, comprenant chacune un passage axial interne, et portant sur sa paroi externe des zones filetées 10, 11 et une région amont 6b comprenant une forme polygonale, comme expliqué ci-après.

Les conduits internes servent également à acheminer le courant électrique jusqu'à un tube contact 21 maintenu dans la buse 9 par un support 22 de tube contact, comme illustré en Figure 2. Ces éléments sont maintenus isolés de la buse 6 par un diffuseur isolant 23. Lors du soudage, le fil fusible traverse en fait le tube contact 21 en étant ensuite progressivement fondu par l'arc électrique qui se crée à l'extrémité libre du fil fusible, lors du soudage.

Il est à noter que, dans le mode de réalisation présenté sur les Figures, la buse de soudage 9 est fixée par vissage au capteur de fumées 4, lequel capteur 4 comprend un taraudage interne 25 complémentaire d'un filetage externe 26 porté par la partie amont 9a de la buse 9.

Le refroidissement du capteur 4, du câble de puissance, de la lance de torche, et des autres pièces d'usure est assuré par un circuit d'eau ouvert à l'extrémité de la lance 6, via un élément diffuseur d'eau 2 formé par une bague annulaire 2 ajourée comportant plusieurs orifices radiaux et servant de diffuseur pour l'eau de refroidissement utilisée pour refroidir directement un volume creux usiné dans le capteur 4 et étanché par des deux joints toriques 1.

Selon l'invention, afin d'éviter toute fuite d'eau lors du démontage du capteur 4 de fumées, la compression des joints 1 d'étanchéité, tels des joints toriques, et donc l'étanchéité du circuit d'eau « ouvert » est assuré par une pièce intermédiaire annulaire taraudée 3, appelée pièce-écrou taraudée 3, par exemple un écrou, qui permet de solidariser mécaniquement le capteur de fumées 4, le coude d'aspiration 5 et la lance de torche 6 comme illustré sur les Figures 2 et 3.

De préférence, la pièce-écrou taraudée 3 vient se visser sur la lance de torche 6, comme expliqué ci-après.

Les pièces d'usure peuvent dès lors être démontées sans intervenir mécaniquement sur les pièces en amont. Le circuit de refroidissement reste toujours étanche, c'est-à-dire qu'il ne se produit pas de fuite d'eau, pas de perte de pièce, ou de chute accidentelle.

En fait, comme illustré en Figures 2 à 4, le raccord de sortie ou la lance de torche 6 comporte une région amont 6b de forme polygonale, par exemple hexagonale ou autre, et, à son extrémité aval libre 6a, une ou plusieurs zones filetées 10, 11, de préférence une première 10 et une deuxième 11 zone filetée de diamètres différents.

La pièce-écrou taraudée 3, tel un écrou ou analogue, vient se visser sur une zone filetée 10, 11 de la lance 6.

Avantageusement, le diamètre de la première 10 zone filetée est supérieur au diamètre de la deuxième 11 zone filetée, ladite première 10 zone filetée étant située entre la région amont 6b de forme polygonale et la deuxième 11 zone filetée.

De préférence, la pièce intermédiaire annulaire taraudée 3, tel un écrou ou analogue, vient se visser sur la première 10 zone filetée, leurs filetages étant complémentaires l'un de l'autre.

Par ailleurs, une pièce isolante 7, telle une bague, de forme complémentaire à celle de la région amont 6b de forme polygonale vient se positionner sur ladite région amont 6b de forme polygonale en y étant alors bloquée en rotation.

Cette pièce isolante 7 comporte également, sur sa surface externe, une forme polygonale, par exemple hexagonale ou autre, et le capteur 4 est usiné intérieurement pour présenter une forme complémentaire de ladite forme polygonale de la pièce isolante 7 de manière à pouvoir venir s'imbriquer sur cette forme polygonale de la pièce isolante 7. Cet ensemble de pièces est bloqué en rotation sur la lance de torche 6 et permet de figer la position du capteur 4 de fumées.

Par ailleurs, le support 22 de tube contact portant le tube contact 21 est fixé, de préférence vissé, à la deuxième zone filetée 11 de la lance de torche 6.

Le mode de réalisation de l'invention permet de faciliter le démontage des pièces d'usure étant donné qu'il n'est pas nécessaire de maintenir le capteur 4 d'une main et la buse 9 (ou le diffuseur) de l'autre pendant leur démontage, et par ailleurs permet également d'éviter toute fuite d'eau.

En outre, cette configuration permet de ne pas solliciter les joints toriques 1 en rotation et donc de fiabiliser l'étanchéité du capteur 4.

En fait, la torche comporte également un élément de rondelle 8, telle une rondelle ou un disque, agencé entre le premier joint torique 1 et la pièce-écrou taraudée 3. Lorsqu'elle est vissée sur le premier filetage 10 de la lance 6, la pièce-écrou taraudée 3 vient appuyer, directement ou indirectement, sur l'élément de rondelle 8 de manière à le repousser en direction des joints toriques 1, ce qui engendre une compression desdits joints 1 et assure l'étanchéité de l'ensemble.

Par ailleurs, afin d'assurer la fixation et le maintien du capteur de fumées 4 sur la torche, ledit capteur de fumées 4 comprend un épaulement interne 24 faisant saillie radialement vers l'intérieur dudit capteur 4, et la pièce-écrou 3 vient exercer une force d'appui sur ledit épaulement interne 24 de manière à le repousser en direction de l'élément de rondelle 8 et à le maintenir en position, c'est-à-dire pris en sandwich, entre la pièce-écrou 3 et l'élément de rondelle 8.

Comme visible en Figures 2 et 3, la lance 6 comprend en fait deux tubes concentriques, usinés et assemblés de manière à former dans la double paroi ainsi formée, deux circuits d'eau séparés, à savoir un circuit d'eau alimenté en eau froide par l'ouverture 27, et un retour d'eau chaude, c'est-à-dire réchauffée, provenant de l'ouverture 28.

La pression de l'eau froide sortie de l'ouverture 27, oblige un écoulement dans la zone creuse comprise entre les deux joints d'étanchéité 1, c'est-à-dire un écoulement circulaire qui permet de refroidir l'embout de lance 6, via une circulation de l'eau à l'intérieur de la bague ajourée 2, et par le passage au travers des trous de la bague ajourée, et par ailleurs via un écoulement extérieur qui permet de refroidir l'intérieur du capteur de fumée 4.

Par contact direct ou par diffusion, une partie des calories du tube contact 21 et du support 22 de tube contact sont captées par la circulation d'eau à l'intérieur de la bague ajourée 2, et une partie des calories de la buse 9, du capteur 4 et de la portion tubulaire 5 coudée sont captées par la circulation d'eau extérieure à la bague 2 ajourée.

En fait, l'eau réchauffée par le contact avec les pièces métalliques chaudes, c'est-à-dire embout de lance 6 et capteur 4, est recueillie par l'ouverture 28, située en opposition de l'ouverture 27, et est ensuite canalisée dans la double paroi de la lance 6, et repart dans le faisceau de torche 18 vers le groupe de refroidissement (non montré) de l'installation.

## Revendications

1. Torche manuelle de soudage à l'arc électrique comprenant :
- un corps de torche (14) comprenant un manche de manipulation (12),
- une portion tubulaire coudée (5) fixée audit corps de torche (14) et comprenant un conduit interne (20), ledit conduit interne (20) comprenant à son extrémité aval (20a), une lance de torche (6) tubulaire avec au moins un passage interne axial,
- un capteur de fumées (4) comprenant un passage interne et une ou plusieurs ouvertures (16) mettant ledit passage interne en communication fluidique avec l'extérieur de la torche, et
**caractérisée en ce que** :
- la lance de torche (6) tubulaire comprend, sur sa surface externe, une région amont (6b) présentant un profil externe donné non circulaire, et une région aval (6a) filetée (10,11),
- une pièce isolante annulaire (7), présentant un profil interne complémentaire du profil de la région amont (6b) de la lance de torche (6), étant agencée autour de la région amont (6b) de la lance de torche (6),
- une pièce-écrou (3) taraudée étant vissée sur la région aval (6a) filetée (10,11) de la lance de torche (6),
- un élément diffuseur d'eau (2), de forme annulaire et percé d'un ou plusieurs orifices radiaux, étant emmanché sur la lance de torche (6) entre la pièce isolante annulaire (7) et la pièce-écrou taraudée (3),
- au moins un premier joint torique (1) étant agencé entre la pièce-écrou taraudée (3) et l'élément diffuseur d'eau (2),
- au moins un deuxième joint torique (1) étant agencé entre l'élément diffuseur d'eau (2) et la pièce isolante annulaire (7), et l'élément diffuseur d'eau (2) étant conformé pour diffuser de l'eau de refroidissement utilisée pour refroidir directement un volume creux usiné dans le capteur (4) et étanché par lesdits premier et deuxième joints toriques (1).

2. Torche selon la revendication précédente, **caractérisée en ce que** la pièce-écrou taraudée (3) est un écrou.

3. Torche selon l'une des revendications précédentes, **caractérisée en ce qu'**un élément de rondelle (8) est agencé entre le premier joint torique (1) et la pièce-écrou taraudée (3), la pièce-écrou taraudée (3) venant appuyer, directement ou indirectement, sur ledit élément de rondelle (8) de manière à le repousser en direction du premier joint torique (1).

4. Torche selon l'une des revendications précédentes, **caractérisée en ce qu'**elle comporte en outre un support (22) de tube contact portant un tube contact (21), ledit un support (22) de tube contact étant fixé, de préférence vissé, à la deuxième zone filetée (11) de la lance de torche (6).

5. Torche selon l'une des revendications précédentes, **caractérisée en ce que** le support (22) de tube contact est maintenu isolé de la buse (6) par un diffuseur isolant (23) agencé entre ledit support (22) de tube contact et ladite buse (6).

6. Torche selon l'une des revendications précédentes, **caractérisée en ce que** la lance de torche (6) tubulaire comprend, sur sa surface externe, une région amont (6b) présentant un profil externe polygonal, de préférence hexagonal.

7. Torche selon l'une des revendications précédentes, **caractérisée en ce que** la pièce isolante annulaire (7), présentant un profil interne complémentaire du profil de la région amont (6b) de la lance de torche (6), vient s'emboiter au niveau de ladite région amont (6b) de la lance de torche (6).

8. Torche selon l'une des revendications précédentes, **caractérisée en ce qu'**elle comporte en outre une buse de soudage (9) fixée à ladite portion tubulaire (5) coudée ou au capteur de fumées (4).

9. Torche selon l'une des revendications précédentes, **caractérisée en ce que** le capteur de fumées (4) comprend un épaulement interne (24) faisant saillie radialement vers l'intérieur dudit capteur de fumées (4), la pièce-écrou (3) venant appuyer sur ledit épaulement interne (24) de manière à le repousser en direction de l'élément de rondelle (8).

10. Torche selon l'une des revendications précédentes, **caractérisée en ce que** la lance de torche (6) est percée de deux ouvertures (27, 28) située entre la région amont (6b) présentant le profil externe donné non circulaire, et la région aval (6b) filetée (10,11).

11. Torche selon l'une des revendications précédentes, **caractérisée en ce que** l'élément diffuseur d'eau (2) est positionné entre le premier joint torique (1) et le deuxième joint torique (1).

12. Torche selon l'une des revendications précédentes, **caractérisée en ce qu'**elle est de type MIG/MAG.

13. Torche selon l'une des revendications précédentes, **caractérisée en ce que** la lance (6) comprend deux tubes concentriques, usinés et assemblés de manière à former dans la double paroi ainsi formée, des circuits d'eau séparés.

14. Installation de soudage comprenant un générateur de courant de soudage, un dévidoir de fil portant une bobine de fil, une source de gaz, et une torche de soudage à l'arc selon l'une des revendications précédentes.

15. Procédé de soudage manuel à l'arc électrique, en particulier de soudage MIG/MAG, mettant en oeuvre une torche selon l'une des revendications 1 à 13 tenue à la main par un opérateur et/ou une installation de soudage selon la revendication 14.

## Patentansprüche

1. Manueller Brenner zum Lichtbogenschweißen, umfassend:
- einen Brennerkörper (14), der einen Handhabungsgriff (12) umfasst,
- einen abgekröpften rohrförmigen Teil (5), der an dem Brennerkörper (14) befestigt ist und eine innere Leitung (20) umfasst, wobei die innere Leitung (20) an ihrem stromabwärtigen Ende (20a) eine rohrförmige Brennerlanze (6) mit wenigstens einem axialen inneren Durchlass und einen Rauchsensor (4) umfasst, der einen inneren Durchlass und eine oder mehrere Öffnungen (16) umfasst, die den inneren Durchlass in Strömungsverbindung mit der Außenumgebung des Brenners bringen, und
**dadurch gekennzeichnet, dass**
- die rohrförmige Brennerlanze (6) an ihrer Außenfläche eine stromaufwärtige Region (6b) umfasst, die ein bestimmtes, nicht kreisförmiges Außenprofil aufweist und eine mit Außengewinde (10, 11) versehene stromabwärtige Region (6a) umfasst,
- ein ringförmiges isolierendes Teil (7) mit einem Innenprofil, das zu dem Profil der stromaufwärtigen Region (6b) der Brennerlanze (6) komplementär ist und um die stromaufwärtige Region (6b) der Brennerlanze (6) herum vorgesehen ist,
- ein mit Innengewinde versehenes Mutterteil (3), das an der mit Außengewinde (10, 11) versehenen stromabwärtigen Region (6a) der Brennerlanze (6) verschraubt ist,
- ein Wasserausgabeelement (2), das ringförmig ist und mit einer oder mehreren radialen Öffnung versehen ist und auf die Brennerlanze (6) zwischen dem ringförmigen isolierenden Teil (7) und dem mit Innengewinde versehenen Mutterteil (3) aufgeschoben wird,
- wenigstens einen ersten O-Ring (1), der zwischen dem mit Innengewinde versehenen Mutterteil (3) und dem Wasserausgabeelement (2) vorgesehen ist,
- wenigstens einen zweiten O-Ring (1), der zwischen dem Wasserausgabeelement (2) und dem ringförmigen isolierenden Teil (7) vorgesehen ist,
wobei das Wasserausgabeelement (2) ausgebildet ist, um Kühlwasser auszugeben, das dafür verwendet wird, direkt einen Hohlraum zu kühlen, der in dem Sensor (4) ausgearbeitet ist und durch den ersten und zweiten O-Ring (1) abgedichtet ist.

2. Brenner nach dem vorhergehenden Anspruch, **dadurch gekennzeichnet, dass** das mit Innengewinde versehene Mutterteil (3) eine Mutter ist.

3. Brenner nach einem der vorhergehenden Ansprüche, **dadurch gekennzeichnet, dass** ein Scheibenelement (8) zwischen dem ersten O-Ring (1) und dem mit Innengewinde versehenen Mutterteil (3) vorgesehen ist, wobei das mit Innengewinde versehene Mutterteil (3) auf dem Scheibenelement (8) direkt oder indirekt so zur Abstützung kommt, dass es dieses in Richtung des ersten O-Rings (1) schiebt.

4. Brenner nach einem der vorhergehenden Ansprüche, **dadurch gekennzeichnet, dass** er ferner einen Kontaktrohr-Träger (22) aufweist, der ein Kontaktrohr (21) trägt, wobei der Kontaktrohr-Träger (22) an der zweiten mit Außengewinde versehenen Zone (11) der Brennerlanze (6) befestigt, bevorzugt verschraubt ist.

5. Brenner nach einem der vorhergehenden Ansprüche, **dadurch gekennzeichnet, dass** der Kontaktrohr-Träger (22) von der Düse (6) isoliert gehalten wird durch einen Isolierdiffusor (23), der zwischen dem Kontaktrohr-Träger (22) und der Düse (6) vorgesehen ist.

6. Brenner nach einem der vorhergehenden Ansprüche, **dadurch gekennzeichnet, dass** die rohrförmige Brennerlanze (6) an ihrer Außenfläche eine stromaufwärtige Region (6b) umfasst, die ein polygonales, bevorzugt hexagonales Außenprofil aufweist.

7. Brenner nach einem der vorhergehenden Ansprüche, **dadurch gekennzeichnet, dass** das ringförmige isolierende Teil (7), das ein Innenprofil aufweist, das zu dem Profil der stromaufwärtigen Region (6b) der Brennerlanze (6) komplementär ist, im Bereich der stromaufwärtigen Region (6b) der Brennerlanze (6) aufgeschoben wird.

8. Brenner nach einem der vorhergehenden Ansprüche, **dadurch gekennzeichnet, dass** er ferner eine Schweißdüse (9) aufweist, die an dem abgekröpften rohrförmigen Teil (5) oder an dem Rauchsensor (4) befestigt ist.

9. Brenner nach einem der vorhergehenden Ansprüche, **dadurch gekennzeichnet, dass** der Rauchsensor (4) einen inneren Absatz (24) umfasst, der in radialer Richtung zu dem Inneren des Rauchsensors (4) vorspringt, wobei das Mutterteil (3) auf dem inneren Absatz (24) so zur Abstützung kommt, dass es ihn in Richtung des Scheibenelements (8) schiebt.

10. Brenner nach einem der vorhergehenden Ansprüche, **dadurch gekennzeichnet, dass** die Brennerlanze (6) mit zwei Öffnungen (27, 28) versehen ist und sich zwischen der stromaufwärtigen Region (6b), die das bestimmte, nicht kreisförmige Außenprofil aufweist, und der mit Außengewinde (10, 11) versehenen stromabwärtigen Region (6b) befindet.

11. Brenner nach einem der vorhergehenden Ansprüche, **dadurch gekennzeichnet, dass** das Wasserausgabeelement (2) zwischen dem ersten O-Ring (1) und dem zweiten O-Ring (1) positioniert ist.

12. Brenner nach einem der vorhergehenden Ansprüche, **dadurch gekennzeichnet, dass** er des MIG/MAG-Typs ist.

13. Brenner nach einem der vorhergehenden Ansprüche, **dadurch gekennzeichnet, dass** die Lanze (6) zwei konzentrische Rohre umfasst, die so ausgearbeitet und verbunden sind, dass sie in der so gebildeten Wand getrennte Wasserkreisläufe bilden.

14. Schweißanlage, umfassend einen Schweißstromerzeuger, eine Drahtvorschubvorrichtung, die eine Drahtspule trägt, eine Gasquelle und einen Lichtbogenschweißbrenner nach einem der vorhergehenden Ansprüche.

15. Verfahren zum manuellen Lichtbogenschweißen, insbesondere zum MIG/MAG-Schweißen, das einen Brenner nach einem der Ansprüche 1 bis 13, der von einem Bediener mit der Hand gehalten wird, und/oder eine Schweißanlage nach Anspruch 14 verwendet.

## Claims

1. Manual electric-arc welding torch comprising:
- a torch body (14) comprising a handling sleeve (12),
- a curved tubular portion (5) which is fixed to said torch body (14) and comprises an inner pipe (20), said inner pipe (20) comprising at the downstream end (20a) thereof a tubular torch lance (6) having at least one axial internal passage, a fume sensor (4) comprising an internal passage and one or more openings (16) placing said internal passage in fluid communication with the outside of the torch, and
**characterised in that**:
- the tubular torch lance (6) comprises, on the outer surface thereof, an upstream region (6b) having a non-circular given external profile, and a threaded (10, 11) downstream region (6a),
- an annular insulating part (7), having an internal profile which is complementary to the profile of the upstream region (6b) of the torch lance (6), being arranged around the upstream region (6b) of the torch lance (6),
- a threaded nut-part (3) being screwed onto the threaded (10, 11) downstream region (6a) of the torch lance (6),
- a water diffusion element (2), which has an annular shape and is penetrated by one or more radial holes, being fitted on the torch lance (6) between the annular insulating part (7) and the threaded nut-part (3),
- at least one first O-ring (1) being arranged between the threaded nut-part (3) and the water diffusion element (2),
- at least one second O-ring (1) being arranged between the water diffusion element (2) and the annular insulating part (7), and
- the water diffusion element (2) being designed to diffuse cooling water which is used to directly cool a hollow volume which is machined in the sensor (4) and is sealed by said first and second O-rings (1).

2. Torch according to the preceding claim, **characterised in that** the threaded nut-part (3) is a nut.

3. Torch according to any of the preceding claims, **characterised in that** a washer element (8) is arranged between the first O-ring (1) and the threaded nut-part (3), the threaded nut-part (3) bearing, directly or indirectly, against said washer element (8) in such a way that it pushes it away towards the first O-ring (1).

4. Torch according to any of the preceding claims, **characterised in that** it further comprises a tubular electrical contact support (22) bearing a tubular electrical contact (21), said tubular electrical contact support (22) being fixed, preferably screwed, to the second threaded region (11) of the torch lance (6).

5. Torch according to any of the preceding claims, **characterised in that** the tubular electrical contact support (22) is kept insulated from the nozzle (6) by an insulating diffuser (23) which is arranged between said tubular electrical contact support (22) and said nozzle (6).

6. Torch according to any of the preceding claims, **characterised in that** the tubular torch lance (6) comprises, on the outer surface thereof, an upstream region (6b) having a polygonal, preferably hexagonal, external profile.

7. Torch according to any of the preceding claims, **characterised in that** the annular insulating part (7), having an internal profile which is complementary to the profile of the upstream region (6b) of the torch lance (6), fits into said upstream region (6b) of the torch lance (6).

8. Torch according to any of the preceding claims, **characterised in that** it further comprises a welding nozzle (9) which is fixed to said curved tubular portion (5) or to the fume sensor (4).

9. Torch according to any of the preceding claims, **characterised in that** the fume sensor (4) comprises an inner shoulder (24) which projects radially towards the inside of said fume sensor (4), the nut-part (3) bearing against said inner shoulder (24) in such a way that it pushes said shoulder away towards the washer element (8).

10. Torch according to any of the preceding claims, **characterised in that** the torch lance (6) is penetrated by two openings (27, 28) which are located between the upstream region (6b) having the non-circular given external profile, and the threaded (10, 11) downstream region (6b).

11. Torch according to any of the preceding claims, **characterised in that** the water diffusion element (2) is positioned between the first O-ring (1) and the second O-ring (1).

12. Torch according to any of the preceding claims, **characterised in that** it is of the MIG/MAG type.

13. Torch according to any of the preceding claims, **characterised in that** the lance (6) comprises two concentric tubes which are machined and assembled in such a way as to form separate water circuits in the double wall thus formed.

14. Welding assembly comprising a welding current generator, a wire feeder supporting a wire reel, a gas source, and an arc welding torch according to any of the preceding claims.

15. Method for manual electric-arc welding, in particular MIG/MAG welding, using a torch according to any of claims 1 to 13 which is held in the hand by an operator and/or a welding assembly according to claim 14.
